# EUROPEAN PATENT SPECIFICATION

(11) **EP 2 403 039 B1**
(45) Date of publication and mention of the grant of the patent: **23.04.2014**
(21) Application number: 11172076.9
(22) Date of filing: 30.06.2011
(51) Int. Cl.: H01M 10/0525, H01M 4/505, H01M 4/525, H01M 4/485

(54) **Lithium ion secondary battery**
Lithiumion-Sekundärbatterie
Batterie au lithium-ion secondaire

(30) Priority: 30.06.2010 JP 2010148424
(43) Date of publication of application: 04.01.2012
(73) Proprietor: Hitachi, Ltd., Tokyo 100-8280 (JP)
(72) Inventor: Konishi, Hiroaki, Tokyo, 100-8220 (JP); Yuasa, Toyotaka, Tokyo, 100-8220 (JP); Yoshikawa, Masanori, Tokyo, 100-8220 (JP)
(74) Representative: Beetz & Partner

(56) References cited:
- JP-A- 2004 303 673
- US-A1- 2006 046 142

## Description

### BACKGROUND OF THE INVENTION

The present invention relates to a lithium ion secondary battery.

In order to adopt a lithium ion secondary battery as a battery for a plug-in hybrid automobile, it is necessary to reduce cost, reduce volume, reduce weight, and increase output, while maintaining high safety. Therefore, it is required for a cathode material to have large capacity and high safety.

As the cathode material, for example, in JP-A-2007-018985, there have been disclosed active material particles having cracks at part of the secondary particles, and having at least one kind of element selected from the group consisting of Mn, Al, Mg, Ca, Zr, B, W, Nb, Ta, In, Mo, and Sn at the outer surface part compared with at the crack surface. However, in the case of the cathode material of JP-A-2007-018985, because of low content of additive elements contributing to safety, although having enhanced safety in short-circuit and over charging, it cannot satisfy safety required for a battery for a large size application such as a plug-in hybrid automobile.

In addition, in JP-A-2008-140747 and JP-A-2007-273441, cycling characteristics are improved by coating the surface of a cathode active material of a layer structure with a compound containing Mo. However, the cathode active material of JP-A-2008-140747 and JP-A-2007-273441 has high content of Co, which is rare metal, in the active material, and thus increases cost and is difficult in deployment to the large size application when a large capacity lithium ion secondary battery, such as for a plug-in hybrid automobile, is required.

In JP-A-2010-73686, there has been disclosed an electrode for an electrochemical element containing Li, Ni, Mn, Co, and at least one kind of element selected from the group consisting of Ti, Cr, Fe, Cu, Zn, Al, Ge, Sn, Mg, Ag, Ta, Nb, B, P, Zr, W, and Ga for the purpose of providing the electrode for the electrochemical element with high capacity and high thermal stability.

### SUMMARY OF THE INVENTION

It is an object of the present invention to provide a high safety cathode active material having large capacity, suppressing deterioration in storage at high temperature, and ensuring thermal stability in a charged state.

The cathode active material of the present invention is characterized by being represented by a composition formula of LiₓNiₐMn_{b}Co_{c}M¹_{d}M²ₑO₂ where M¹ is at least one or more kinds of elements selected from the group consisting of Al, Ti, and Mg; M² is at least one or more kinds of elements selected from the group consisting of Mo, W, and Nb; 0.2≤x≤1.2; 0.6≤a≤0.8; 0.05≤b≤0.3; 0.05≤c≤0.3; 0.02≤d≤0.04; 0,02≤e≤0.06; and a+b+c+d+e=1.0.

According to the present invention, a high safety cathode active material having large capacity to be used for a battery for a plug-in hybrid automobile, suppressing deterioration in storage at high temperature, and ensuring thermal stability in a charged state, a cathode material for a lithium ion secondary battery using this cathode active material, and a lithium ion secondary battery using this cathode material for a lithium ion secondary battery can be provided.

Other objects, features, and advantages of the invention will become apparent from the following description of the embodiments of the invention taken in conjunction with the accompanying drawings.

### BRIEF DESCRIPTION OF THE DRAWINGS

Fig. 1 is a graph showing a differential scanning calorimetry (DSC) measurement result when a cathode material in a charged state and an electrolyte are mixed and temperature is raised.
Fig. 2 is a partial cross-sectional diagram showing the whole configuration of a lithium ion secondary battery.

### DESCRIPTION OF THE EMBODIMENTS

The present invention relates to a cathode active material having large capacity, high output, and high safety; a cathode material for a lithium ion secondary battery containing this cathode active material; and a lithium ion secondary battery using this cathode material for a lithium ion secondary battery.

In order to obtain large capacity in the layer-type cathode material represented by a composition formula of LiMO₂ (wherein M is transition metal), it is necessary to increase content of Ni in a transition metal layer.

However, the cathode material with high Ni content has low structural stability in a charged state compared with other transition metals such as Mn; when temperature of a battery is increased by internal short-circuit or the like, there is a risk, even at relatively low temperature, of leading to ignition and bursting of a battery because oxygen released from the inside of the cathode material reacts with an electrolyte to generate a large exothermic reaction. Here, high Ni content means that the content ofNi is high in the total amount of the transition metal and additive metals M¹ and M².

Description will be given below on features of the present embodiments.

Lithium-ion cathode active materials of the present embodiments are represented by a composition formula of LiₓNiₐMn_{b}Co_{c}M¹_{d}M²ₑO₂. In the formula, M¹ is at least one or more kinds of elements selected from the group consisting of Al, Ti, and Mg; M² is at least one or more kinds of elements selected from the group consisting of Mo, W, and Nb; 0.2≤x≤1.2; 0.6≤a≤0.8; 0.05≤b≤0.3; 0.05≤c≤0.3; 0.02≤d≤0.04; 0.02≤e≤0.06; and a+b+c+d+e=1.0.

Although the cathode active material with high Ni content provides large capacity, it has disadvantages of low storage characteristics and thermal stability in a charged state.

Accordingly, by suppressing the increase in resistance with adding at least one or more kinds of elements selected from the group consisting of Al, Ti, and Mg, to the cathode active material with high Ni content, storage characteristics in a charged state are improved. Also, by suppressing the amount of generated heat to a low level with adding at least one or more kinds of elements selected from the group consisting of Mo, W, and Nb, thermal stability in a charged state is improved.

The cathode active materials of the embodiments can significantly reduce the amount of generated heat when temperature is raised together with the electrolyte compared with cathode active materials of high Ni content without additive elements. Therefore, it is capable of reducing a probability of leading to ignition and bursting when the temperature of the battery increases.

Therefore, by using the cathode active materials of the embodiments the cathode materials for the lithium ion secondary battery and the lithium ion secondary batteries, which reduce the probability of leading to ignition or the like in temperature increase, can be provided.

Here, the amount of Li in the cathode active materials is 0.2≤x≤1.2. In the case of x<0.2, the amount of Li contained in a Li layer is too low to maintain a layer crystalline structure in a charged state. Also, in the case of 1.2<x, the amounts of transition metals in a complex oxide are decreased and the capacity goes down.

The amount of Ni is 0.6≤a≤0.8. In the case of a<0.6, the content of Ni mainly contributing to charge-discharge reactions becomes low and the capacity goes down. Also, in the case of a>0.8, the relative content of elements other than Ni is reduced and the thermal stability goes down.

The amount of Mn is 0.05≤b≤0.3. In the case of b<0.05, a structure in a charged state becomes unstable and temperature of oxygen release from the cathode goes down. Also, in the case of b>0.3, the content ofNi mainly contributing to charge-discharge reactions is decreased and the capacity goes down.

The amount of Co is 0.05≤c≤0.3. In the case of c<0.05, a structure in a charged state becomes unstable and a volume change of the cathode active material in charging and discharging becomes large. Also, in the case of c>0.3, the content ofNi mainly contributing to charge-discharge reactions is decreased and the capacity goes down.

The amount of M¹ is 0.02≤d≤0.04. In the case of d<0.02, deterioration in storage at high temperature cannot be suppressed. Also, in the case of d>0.04, the content ofNi mainly contributing to charge-discharge reactions is decreased and the capacity goes down.

The amount of M² is 0.02≤e≤0.06. In the case of e<0.02, thermal stability in a charged state cannot be secured. Also, in the case of e>0.06, the content ofNi mainly contributing to charge-discharge reactions is decreased and the capacity goes down.

That is, the lithium ion secondary battery using the cathode active material containing the above-mentioned predetermined amounts of M¹ and M² can suppress deterioration in storing at high temperature and thermal stability in a charged state can be secured.

### (Production of the cathode active materials)

As a raw material, oxides containing any one or more kinds of elements among Ni, Mn, Co, M¹, and M² were used and pure water was added to make slurry after weighing so as to attain a predetermined atomic ratio. It should be noted that, as for only M², the amount of half of the content of an objective composition was used.

This slurry was pulverized with a zirconia bead mill till an average particle size became 0.2µm. Into this slurry, a solution of polyvinyl alcohol (PVA) was added in 1 wt% as converted to the solid content ratio; it was mixed for further 1 hour and was granulated and dried with a spray dryer. After that, by baking it at 600°C for 20 hours, particles having each element distributed uniformly were obtained. After that, an oxide of M² equivalent to half the amount of the content of an objective composition pulverized with a bead mill to an average particle size of 0.2 µm was added to the particles. Here wt% is a unit showing the ratio in terms of weight.

Next, lithium hydroxide and lithium carbonate were added to the particles so as to attain a ratio of Li : (Ni, Mn, Co, M¹, and M²), (that is, a ratio of Li against Ni, Mn, Co, M¹, and M²) of 1.05: 1 and by baking it at 850°C for 20 hours Cathode Active Material 1 having a crystal of a layer structure was obtained.

A production method of the cathode active material is not limited to the above method and other methods such as a coprecipitation method may be used.

Similarly, by using the above production method, Cathode Active Materials 2 to 11 and 14 to 23 were synthesized.

As for Cathode Active Materials 12 and 13, although the composition ratio (atomic ratio) of metals other than lithium was the same as Material 1, the ratios of M² to be added separately in two stages were changed. Here, a value obtained by dividing the content of M² at the surface part with the content of M² at the inside of the particles is defined as (content of M² at the surface part)/(content of M² at the inside).
Table 1 shows the composition ratios (atomic ratios) of metals other than lithium as for Cathode Active Materials 1 to 23.
Table 2 shows the content of M² added in the first stage, the content of M² added in the second stage, and (content of M² at the surface part)/(content of M² at the inside).

Here, the contents of the elements at the surface and the inside of the particles were measured using an Auger electron spectroscopy. An electron gun was a thermal radiation type and atomic concentrations ofNi, Mn, Co, Al, Mo, and O were measured at conditions of an acceleration voltage of 5.0 kV and a beam current of 90 nA. Conditions of an ion gun were the acceleration voltage of 3.0 kV and ion species of Ar⁺; a raster size was 3mm×3mm and the depth direction analysis was performed at a sample inclination of 30 degrees. Measurement depth was called in SiO₂ equivalent and the content of elements at a depth of 30nm was used to define M² at the surface and the one at a depth of 300 nm was used to define M² at the inside.

**Table 1**

| | Composition | | | | | | | | |
|---|---|---|---|---|---|---|---|---|---|
| | | | | M1 | | | M2 | | |
| | Ni | Mn | Co | Al | Ti | Mg | Mo | W | Nb |
| Cathode Active material 1 | 70 | 5 | 19 | 2 | - | - | 4 | - | - |
| Cathode Active Material 2 | 80 | 5 | 9 | 2 | - | - | 4 | - | - |
| Cathode Active Material 3 | 65 | 15 | 14 | 2 | - | - | 4 | - | - |
| Cathode Active Material 4 | 60 | 15 | 19 | 2 | - | - | 4 | - | - |
| Cathode Active Material 5 | 70 | 5 | 17 | 4 | - | - | 4 | - | - |
| Cathode Active Material 6 | 70 | 5 | 21 | 2 | - | - | 2 | - | - |
| Cathode Active Material 7 | 70 | 5 | 17 | 2 | - | - | 6 | - | - |
| Cathode Active Material 8 | 70 | 5 | 19 | - | 2 | - | 4 | - | - |
| Cathode Active Material 9 | 70 | 5 | 19 | - | - | 2 | 4 | - | - |
| Cathode Active Material 10 | 70 | 5 | 19 | 2 | - | - | - | 4 | - |
| Cathode Active Material 11 | 70 | 5 | 19 | 2 | - | - | - | - | 4 |
| Cathode Active Material 12 | 70 | 5 | 19 | 2 | - | - | 4 | - | - |
| Cathode Active Material 13 | 70 | 5 | 19 | 2 | - | - | 4 | - | - |
| Cathode Active Material 14 | 60 | 20 | 20 | - | - | - | - | - | - |
| Cathode Active Material 15 | 50 | 25 | 25 | - | - | - | - | - | - |
| Cathode Active Material 16 | 85 | 5 | 5 | 1 | - | - | 4 | - | - |
| Cathode Active Material 17 | 55 | 19 | 20 | 2 | - | - | 4 | - | - |
| Cathode Active Material 18 | 70 | 5 | 15 | 6 | - | - | 4 | - | - |
| Cathode Active Material 19 | 70 | 5 | 22 | 2 | - | - | 1 | - | - |
| Cathode Active Material 20 | 70 | 5 | 15 | 2 | - | - | 8 | - | - |
| Cathode Active Material 21 | 70 | 5 | 23 | 2 | - | - | - | - | - |
| Cathode Active Material 22 | 70 | 5 | 21 | - | - | - | 4 | - | - |
| Cathode Active Material 23 | 70 | 5 | 20 | 1 | - | - | 4 | - | - |

**Table 2**

| | Content of Mo | Content of M2 to be added in the first stage mixing | Content of M2 to be added in the second stage mixing | (Content of M2 at the surface part)/(Content of M2 at the inside) |
|---|---|---|---|---|
| Cathode Active Material 1 | 4 | 2 | 2 | 1.42 |
| Cathode Active Material 12 | 4 | 3 | 1 | 1.23 |
| Cathode Active Material 13 | 4 | 4 | 0 | 1.09 |

### [Embodiment 1]

### (A prototype battery)

Cathode Active Material 1 and a carbon-based electric conductor were weighed so as to attain a weight ratio of 85 : 10.7 and they were mixed using a mortar. The mixture of Cathode Active Material 1 and the carbon-based electric conductor and a binding agent dissolved in N-methyl-2-pyrrolidone (NMP) were mixed so as to attain a weight ratio of the mixture and the binding agent of 95.7 : 4.3.

After applying slurry thus mixed homogeneously onto the surface of a foil-like aluminum collector with a thickness of 20µm, it was dried at 120°C and compression-molded with a press so as to attain an electrode density of 2.7×10³kg/m³. After that it was punched out to a circular disk with a diameter of 15mm to produce a cathode.

The prototype battery was produced using the produced cathode, metal lithium as an anode, and a non-aqueous electrolyte (the one obtained by dissolving LiPF₆ at 1.0mol/L in a mixed solvent of ethylene carbonate (EC) and dimethyl carbonate (DMC) at a volume ratio of 1 : 2). Incidentally, other Embodiments 2 to 15 and Comparative Examples 1 to 11 were described later in this description.

Then, the following tests were performed using the above-described prototype battery.

### (A charge-discharge test)

Initialization was performed by repeating charge-discharge three times at 0.1C (that is, 0.1 times the current at which a full discharge completes in 1 hour. Similar designations are used hereinafter), the upper limit voltage of 4.3V, and the lower limit voltage of 2.7V Further, charge-discharge was performed at 0.1C, the upper limit voltage of 4.3V, and the lower limit voltage of 2.7V to measure the discharge capacity.

In Embodiments 1, 2, and 5 to 13 and Comparative Examples 1, 3, and 5 to 8, values obtained by dividing the obtained discharge capacities with the discharge capacity of Comparative Example 1 to be described later were defined as capacity ratios.

In addition, in Embodiments 3 and 4 and Comparative Examples 2 and 4, values obtained by dividing the values of the obtained discharge capacities with the value of the discharge capacity of Comparative Example 2 to be described later were defined as capacity ratios.

### (Differential Scanning Calorimetry)

After charging at constant current/constant voltage up to 4.3V, the cathode was taken out from the prototype battery and washed with DMC. After that, it was punched out to a circular disk with a diameter of 3.5mm, which was put into a sample pan and sealed after adding 1µL (micro liter) of the electrolyte.

Exothermic behavior was examined when the temperature of this sample was raised from room temperature up to 400°C at a rate of 5°C/min.

In Embodiments 1, 2, and 5 to 13 and Comparative Examples 1, 3, and 5 to 8, values obtained by dividing the obtained amounts of generated heat with the amount of generated heat of Comparative Example 1 to be described later were defined as ratios of the amount of generated heat.

In addition, in Embodiments 3 and 4 and Comparative Examples 2 and 4, values obtained by dividing the obtained amounts of generated heat with the amount of generated heat of Comparative Example 2 to be described later were defined as ratios of the amount of generated heat.

### (A cylinder-type battery)

In order to produce a cylinder-type battery, a cathode plate 1 using the synthesized cathode active material was cut so as to attain an application width of 54mm and an application length of 500mm and a lead strip made of aluminum foil to take out electric current was welded so that the cathode plate was produced.

Next, an anode plate to be combined with this cathode plate was produced.

By mixing and dissolving a graphite-type carbon material of an anode active material into NMP which already dissolved a binding agent therein, an anode mixture slurry was produced. Then, a dry weight ratio of the amorphous carbon material and the binding agent was set to attain 92 : 8.

This anode mixture slurry was uniformly applied onto a rolled copper foil with a thickness of 10µm. After that, it was compression-molded using a roll press machine, cut so as to attain an application width of 56mm and an application length of 540mm, and welded with a lead strip made of copper foil to produce an anode plate.

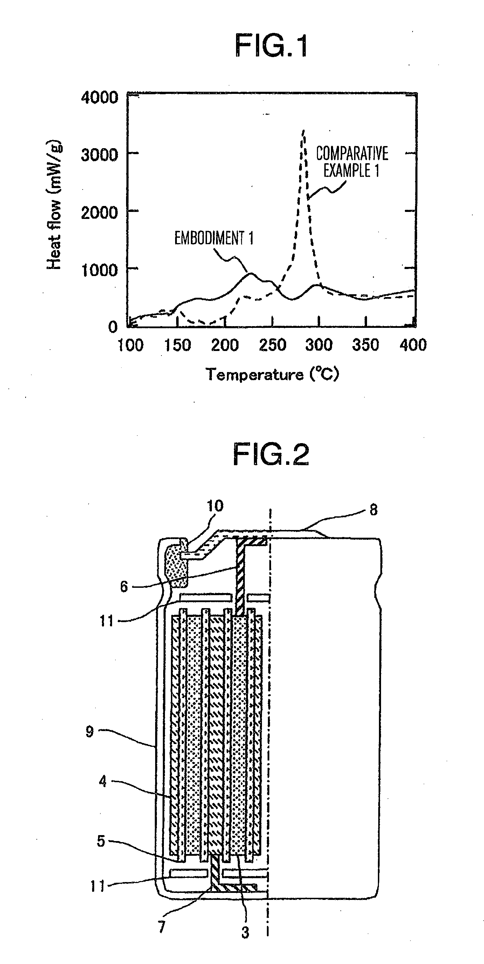

Fig. 2 is a cross-sectional view showing a lithium ion secondary battery.

Using the cathode plate and the anode plate produced as described above, a cylinder-type battery shown in the present figure was produced. Explanation will be given on procedures thereof with reference to Fig. 2.

First, a separator 5 was arranged between the cathode plate 3 and the anode plate 4 so that the cathode plate 3 and the anode plate 4 would not contact directly and they were rolled to produce an electrode group. At that time, a lead strip 6 of the cathode plate and a lead strip 7 of the anode plate were positioned on the both end faces of mutually opposite sides of the electrode group. Further, caution was paid for an applied part of the cathode mixture not to stick out from an applied part of the anode mixture in the arrangement of the cathode plate 3 and the anode plate 4. In addition, as the separator 5 used here a microporous polypropylene film with a thickness of 25µm and a width of 58mm was used.

Next, the electrode group was inserted into a battery can 9 made of stainless steel, the anode lead strip 7 was welded to the bottom part of the can, and the cathode lead strip 6 was welded to a seal lid part 8, which also worked as a cathode current terminal. Into the battery can 9 arranged with this electrode group a non-aqueous electrolyte (the one dissolved LiPF₆ at 1.0mol/L into a mixed solvent of ethylene carbonate (EC) and dimethyl carbonate (DMC) in a volume ratio of 1 : 2) was poured and, then, the seal lid part 8 attached with a packing 10 was swaged to the battery can 9 to seal so that the cylinder-type battery with a diameter of 18mm and a length of 65mm was produced. Here, at the seal lid part 8 a cleavage valve was installed for releasing pressure inside the battery by cleaving in the case of pressure increase in the battery and insulating plates 11 were arranged between the seal lid part 8 and the electrode group and between the bottom part of the battery can 9 and the electrode group.

Next, the following tests were performed using the above-described cylinder-type battery.

### (A charge-discharge test)

Initialization was performed by repeating charge-discharge three times, at 0.3C, the upper limit voltage of 4.2V, and the lower limit voltage of 2.7V Further, charge-discharge was performed at 0.3C, the upper limit voltage of 4.2V, and the lower limit voltage of 2.7V to measure the battery discharge capacity.

### (Resistance measurement)

After performing the charge-discharge test the battery was charged up to a state of charge of 50% and open circuit voltage was measured. Then, a voltage at 10 seconds after starting discharge at a current equivalent to 1C was measured and voltage drop (ΔV) was determined as a difference between them. Further, similar charge-discharge was performed while changing the discharge current condition to equivalent to 3C and equivalent to 6C to measure voltage drops of respective discharge currents (I).

By plotting these discharge currents (I) and voltage drops (ΔV), resistance of the battery was calculated as a slope thereof. Next, energy output of the battery was determined from the open circuit voltage and resistance of the battery at a battery state of charge of 50%. Further, after storing this battery in a thermostatic vessel held at 50°C in a state of charge of 90% for three months resistance of the battery was measured again. Ratio of increase in battery resistance was defined as a value obtained by dividing the value of battery resistance after storing for three months by that prior to the storage.

In Embodiments 14 and 15 and Comparative Examples 10 and 11, all to be described later, values obtained by dividing the obtained discharge capacities with the discharge capacity of Comparative Example 9 were defined as capacity ratios and shown in Table 6.

Also, in Embodiments 14 and 15 and Comparative Examples 10 and 11, values obtained by dividing the obtained ratios of increase in battery resistance with the ratio of increase in battery resistance of Comparative Example 9 were defined as resistance increase ratios and shown in Table 6.

In addition, an electric conductor, a binding agent, an anode, an electrolyte solvent, and an electrolyte solute, to be used in the prototype batteries and the cylinder-type batteries in the present Embodiments, are not limited to those explained in the present Embodiments and, for example, the following may be used.

As the electric conductor, graphite, acetylene black, carbon black, or the like may be enumerated.

As the binding agent, polytetrafluoroethylene, a rubber-type binder, or the like may be enumerated.

As the anode, a graphite-type carbon material, hard carbon, soft carbon, or the like may be enumerated.

As the electrolyte solvent, ethylene carbonate, propylene carbonate, dimethyl carbonate, diethyl carbonate, methyl ethyl carbonate, y-butyrolactone, tetrahydrofuran, dimethoxy ethane, or the like may be enumerated.

As the electrolyte solute, LiBF₄, LiClO₄, LiAsF₆, LiCF₃SO₃, LiN(CF₃SO₂)₂, or the like may be enumerated.

### [Embodiment 2]

In Embodiment 2, a prototype battery was produced in a similar method as in Embodiment 1 except for using produced Cathode Active Material 2; the charge-discharge test and the differential scanning calorimetry were performed.

### [Embodiment 3]

In Embodiment 3, a prototype battery was produced in a similar method as in Embodiment 1 except for using produced Cathode Active Material 3; the charge-discharge test and the differential scanning calorimetry were performed.

### [Embodiment 4]

In Embodiment 4, a prototype battery was produced in a similar method as in Embodiment 1 except for using produced Cathode Active Material 4; the charge-discharge test and the differential scanning calorimetry were performed.

### [Embodiment 5]

In Embodiment 5, a prototype battery was produced in a similar method as in Embodiment 1 except for using produced Cathode Active Material 5; the charge-discharge test and the differential scanning calorimetry were performed.

### [Embodiment 6]

In Embodiment 6, a prototype battery was produced in a similar method as in Embodiment 1 except for using produced Cathode Active Material 6; the charge-discharge test and the differential scanning calorimetry were performed.

### [Embodiment 7]

In Embodiment 7, a prototype battery was produced in a similar method as in Embodiment 1 except for using produced Cathode Active Material 7; the charge-discharge test and the differential scanning calorimetry were performed.

### [Embodiment 8]

In Embodiment 8, a prototype battery was produced in a similar method as in Embodiment 1 except for using produced Cathode Active Material 8; the charge-discharge test and the differential scanning calorimetry were performed.

### [Embodiment 9]

In Embodiment 9, a prototype battery was produced in a similar method as in Embodiment 1 except for using produced Cathode Active Material 9; the charge-discharge test and the differential scanning calorimetry were performed.

### [Embodiment 10]

In Embodiment 10, a prototype battery was produced in a similar method as in Embodiment 1 except for using produced Cathode Active Material 10; the charge-discharge test and the differential scanning calorimetry were performed.

### [Embodiment 11]

In Embodiment 11, a prototype battery was produced in a similar method as in Embodiment 1 except for using produced Cathode Active Material 11; the charge-discharge test and the differential scanning calorimetry were performed.

### [Embodiment 12]

In Embodiment 12, a prototype battery was produced in a similar method as in Embodiment 1 except for using produced Cathode Active Material 12; the charge-discharge test and the differential scanning calorimetry were performed.

### [Embodiment 13]

In Embodiment 13, a prototype battery was produced in a similar method as in Embodiment 1 except for using produced Cathode Active Material 13; the charge-discharge test and the differential scanning calorimetry were performed.

### [Embodiment 14]

In Embodiment 14, a cylinder-type battery was produced using produced Cathode Active Material 1 as the cathode. Using the present battery, the charge-discharge test was performed and increase in resistance after storage at high temperature was measured.

### [Embodiment 15]

In Embodiment 15, a cylinder-type battery was produced using produced Cathode Active Material 5 as the cathode. Using the present battery, the charge-discharge test was performed and increase in resistance after storage at high temperature was measured.

### [Comparative Example 1]

In Comparative Example 1, a prototype battery was produced in a similar method as in Embodiment 1 except for using produced Cathode Active Material 14; the charge-discharge test and the differential scanning calorimetry were performed.

### [Comparative Example 2]

In Comparative Example 2, a prototype battery was produced in a similar method as in Embodiment 1 except for using produced Cathode Active Material 15; the charge-discharge test and the differential scanning calorimetry were performed.

### [Comparative Example 3]

In Comparative Example 3, a prototype battery was produced in a similar method as in Embodiment 1 except for using produced Cathode Active Material 16; the charge-discharge test and the differential scanning calorimetry were performed.

### [Comparative Example 4]

In Comparative Example 4, a prototype battery was produced in a similar method as in Embodiment 1 except for using produced Cathode Active Material 17; the charge-discharge test and the differential scanning calorimetry were performed.

### [Comparative Example 5]

In Comparative Example 5, a prototype battery was produced in a similar method as in Embodiment 1 except for using produced Cathode Active Material 18; the charge-discharge test and the differential scanning calorimetry were performed.

### [Comparative Example 6]

In Comparative Example 6, a prototype battery was produced in a similar method as in Embodiment 1 except for using produced Cathode Active Material 19; the charge-discharge test and the differential scanning calorimetry were performed.

### [Comparative Example 7]

In Comparative Example 7, a prototype battery was produced in a similar method as in Embodiment 1 except for using produced Cathode Active Material 20; the charge-discharge test and the differential scanning calorimetry were performed.

### [Comparative Example 8]

In Comparative Example 8, a prototype battery was produced in a similar method as in Embodiment 1 except for using produced Cathode Active Material 21; the charge-discharge test and the differential scanning calorimetry were performed.

### [Comparative Example 9]

In Comparative Example 9, a cylinder-type battery was produced using produced Cathode Active Material 14 as the cathode. Using the present battery, the charge-discharge test was performed and increase in resistance after storage at high temperature was measured.

### [Comparative Example 10]

In Comparative Example 10, a cylinder-type battery was produced using produced Cathode Active Material 22 as the cathode. Using the present battery, the charge-discharge test was performed and increase in resistance after storage at high temperature was measured.

### [Comparative Example 11]

In Comparative Example 11, a cylinder-type battery was produced using produced Cathode Active Material 23 as the cathode. Using the present battery, the charge-discharge test was performed and increase in resistance after storage at high temperature was measured.
Table 3 shows capacity ratios and ratios of the amount of generated heat of Embodiments 1 to 11 and Comparative Examples 1 to 8.
Table 4 shows capacity ratios and ratios of the amount of generated heat of Embodiments 3 and 4 and Comparative Examples 2 and 4.
Table 5 shows capacity ratios and ratios of the amount of generated heat of Embodiments 1, 12, and 13.
Table 6 shows capacity ratios and resistance ratios of Embodiments 14 and 15 and Comparative Examples 9 to 11.

**Table 3**

| | Capacity Ratio | Ratio of Amount of Generated Heat |
|---|---|---|
| Embodiment 1 | 1.081 | 0.776 |
| Embodiment 2 | 1.138 | 0.931 |
| Embodiment 3 | 1.040 | 0.924 |
| Embodiment 4 | 1.013 | 0.983 |
| Embodiment 5 | 1.025 | 0.755 |
| Embodiment 6 | 1.106 | 0.988 |
| Embodiment 7 | 1.015 | 0.727 |
| Embodiment 8 | 1.081 | 0.804 |
| Embodiment 9 | 1.081 | 0.818 |
| Embodiment 10 | 1.050 | 0.759 |
| Embodiment 11 | 1.056 | 0.744 |
| Comparative Example 1 | 1.000 | 1.000 |
| Comparative Example 2 | 1.000 | 1.000 |
| Comparative Example 3 | 1.131 | 1.035 |
| Comparative Example 4 | 0.960 | 0.883 |
| Comparative Example 5 | 0.994 | 0.745 |
| Comparative Example 6 | 1.113 | 1.020 |
| Comparative Example 7 | 0.963 | 0.701 |
| Comparative Example 8 | 1.119 | 1.162 |

**Table 4**

| | Capacity Ratio | Ratio of Amount of Generated Heat |
|---|---|---|
| Embodiment 3 | 1.040 | 0.924 |
| Embodiment 4 | 1.013 | 0.983 |
| Comparative Example 2 | 1.000 | 1.000 |
| Comparative Example 4 | 0.960 | 0.883 |

**Table 5**

| | Capacity Ratio | Ratio of Amount of Generated Heat |
|---|---|---|
| Embodiment 1 | 1.081 | 0.776 |
| Embodiment 12 | 1.083 | 0.781 |
| Embodiment 13 | 1.085 | 0.790 |

**Table 6**

| | Capacity Ratio | Resistance Increase Ratio |
|---|---|---|
| Embodiment 14 | 1.081 | 0.923 |
| Embodiment 15 | 1.024 | 0.889 |
| Comparative Example 9 | 1.000 | 1.000 |
| Comparative Example 10 | 1.105 | 0.989 |
| Comparative Example 11 | 1.093 | 0.981 |

From Table 3, in Embodiments 1, 2, and 5 to 11, results of larger discharge capacity and smaller amount of generated heat were obtained compared with Comparative Example 1.

It is considered that the larger values of discharge capacity were shown because the cathode materials selected in respective Embodiments contained high amounts ofNi in a transition metal layer. In addition, it is considered that the smaller amounts of generated heat were because M² (Mo, W, and Nb), which enhances thermal stability in a charged state, was contained at 2% or more.

On the other hand, in Comparative Examples 3 and 5 to 8, it was impossible to attain both enhancement of the discharge capacity and reduction of the amount of generated heat. In Comparative Example 3, because of the high content ofNi of 85%, the amount of generated heat increased. In Comparative Example 5, because of the high content of Al of 6%, the discharge capacity decreased. In Comparative Examples 6 and 8, because of the low content of Mo of 1% and 0%, respectively, enhancement effect of thermal stability was small and the amount of generated heat increased. In Comparative Example 7, because of the high content of Mo of 6%, the discharge capacity decreased.

From Table 4, in Embodiments 3 and 4, results of larger discharge capacities and smaller amounts of generated heat were obtained compared with Comparative Example 2.

It is considered that the larger values of discharge capacity were shown because the cathode materials selected in respective Embodiments contained high amounts ofNi in a transition metal layer. In addition, it is considered that the smaller amounts of generated heat were because Mo, which enhances thermal stability in a charged state, existed at 2% or more.

On the other hand, in Comparative Example 4, it was impossible to attain both enhancement of the discharge capacity and reduction of the amount of generated heat. The reason for decrease in the discharge capacity is the low content of Ni of 55%, which mainly contributes to a charge-discharge reaction.

From Table 5, in Embodiments 12 and 13, results of larger discharge capacities and smaller amounts of generated heat were obtained compared with Comparative Example 1. However, the ratio of the amount of generated heat increased compared with Embodiment 1. This is because the lower content of Mo present at the surface part in Embodiments 12 and 13 than in Embodiment 1. This is because the exothermic reaction between the electrolyte and the cathode which occurs mainly at the surface part of the cathode is suppressed by containing the large amount of Mo, which enhances thermal stability of the cathode, at the surface part.

Accordingly, it is preferable that (content of M² at the surface part)/(content of M² at the inside) is at least 1.09 or more. It is still more preferable that (content of M² at the surface part)/(content of M² at the inside) is 1.42 or less.

From Table 6, it is understood that in Embodiments 14 and 15 increases in resistance after storing at high temperature can be suppressed by 5% or more compared with Comparative Example 9.

On the other hand, in Comparative Examples 10 and 11, it was impossible to attain both enhancement of the discharge capacity and suppression of the increase in resistance after storage at high temperature. This shows that the content of Al was as low as less than 2% and suppression of the increase in resistance was a very low value of 2% or lower. From this result, it is understood that for suppression of the increase in resistance the content of Al is necessary to be 2% or higher.

Fig. 1 shows DSC measurement results of Embodiment 1 and Comparative Example 1.

In the present figure, with Embodiment 1 there is no significant exothermic peak. On the contrary, with Comparative Example 1 there is an exothermic peak at around 280°C.

By using the active material shown in the present embodiments for a cathode of a lithium ion secondary battery, there can be provided a cathode material for a lithium ion secondary battery, which is capable of attaining high capacity and high safety required in a battery for a plug-in hybrid automobile.

It should be further understood by those skilled in the art that although the foregoing description has been made on embodiments of the invention, the invention is not limited thereto and various changes and modifications may be made without departing from the scope of the appended claims.

The present invention is applicable to a cathode material of a lithium ion secondary battery and is applicable to a lithium ion secondary battery for a plug-in hybrid automobile.

## Claims

1. A cathode active material (3) represented by a composition formula of Li,Ni,Mn_{b}Co_{c}M¹_{d}M²ₑO₂ where M¹ is at least one or more kinds of elements selected from the group consisting of Al, Ti, and Mg; M² is at least one or more kinds of elements selected from the group consisting of Mo, W, and Nb; 0.2≤x≤1.2; 0.6≤a≤0.8; 0.05≤b≤0.3; 0.05≤c≤0.3; 0.02≤d≤0.04; 0.02≤e≤0.06; and a+b+c+d+e=1.0.

2. The cathode active material according to Claim 1, wherein a range of "a" of said formula is 0.7≤a≤0.8.

3. The cathode active material according to Claim 1 or 2, wherein a range of "e" of said formula is 0.04≤e≤0.06.

4. A cathode material for a lithium ion secondary battery composed of particles comprising the cathode active material according to any one of Claims 1 to 3, wherein concentration of M² contained in said particles is higher at the surface part of said particles than at the inside of said particles.

5. The cathode material for the lithium ion secondary battery according to Claim 4, wherein concentration of M² contained in said particles satisfies 1.09≤(content of M² at the surface part)/(content of M² at the inside).

6. The cathode material for the lithium ion secondary battery according to Claim 5, wherein concentration of M² contained in said particles further satisfies (content of M² at the surface part)/(content of M² at the inside)≤1.42.

7. A lithium ion secondary battery in which a cathode (3) enabling to store and release lithium and an anode (4) enabling to store and release lithium are arranged via a nonaqueous electrolyte and a separator (5) thereinbetween, wherein said cathode (3) comprises the cathode material for the lithium ion secondary battery according to Claim 4.

## Patentansprüche

1. Aktives Kathodenmaterial (3) dargestellt durch eine Zusammensetzungsformel LiₓNiₐMn_{b}Co_{c}M¹_{d}M²ₑO₂, wobei M¹ mindestens eine Sorte oder mehr von Elementen ist, die ausgewählt sind aus der Gruppe bestehend aus Al, Ti und Mg, wobei M² mindestens eine Sorte oder mehr von Elementen ist, die ausgewählt sind aus der Gruppe bestehend aus Mo, W und Nb; wobei 0,2 ≤ x ≤ 1,2; 0,6 ≤ a ≤ 0,8; 0,05 ≤ b ≤ 0,3; 0, 05 ≤ c ≤ 0, 3; 0, 02 ≤ d ≤ 0,04; 0, 02 ≤ e ≤ 0,06; und a+b+c+d+e=1,0.

2. Aktives Kathodenmaterial nach Anspruch 1, wobei ein Bereich für "a" in der Formel definiert ist als 0,7 ≤ a ≤ 0,8.

3. Aktives Kathodenmaterial nach Anspruch 1 oder 2, wobei ein Bereich für "e" in der Formel definiert ist als 0,04 ≤ e ≤ 0,06.

4. Kathodenmaterial für eine Lithiumionen-Sekundärbatterie bestehend aus Partikeln, die das aktive Kathodenmaterial nach einem der Ansprüche 1 bis 3 aufweisen, wobei die Konzentration von M², welches in den Partikeln enthalten ist, im Oberflächenbereich höher ist als innerhalb der Partikel.

5. Kathodenmaterial für die Lithiumionen-Sekundärbatterie nach Anspruch 4, wobei die Konzentration von M², welches in den Partikeln enthalten ist, folgende Beziehung erfüllt: 1,09 ≤ (Gehalt von M² im Oberflächenbereich)/(Gehalt von M² innen).

6. Kathodenmaterial für die Lithiumionen-Sekundärbatterie nach Anspruch 5, wobei die Konzentration von M², welches in den Partikeln enthalten ist, ferner folgende Beziehung erfüllt: (Gehalt an M² im Oberflächenbereich)/(Gehalt von M² innen) ≤ 1,42.

7. Lithiumionen-Sekundärbatterie, in der eine Kathode (3), welche Lithium speichern und freisetzen kann, und eine Anode (4), welche Lithium speichern und freisetzen kann, über einen nichtwässerigen Elektrolyten und einen dazwischenliegenden Separator (5), angeordnet sind, wobei die Kathode (3) das Kathodenmaterial für die Lithiumionen-Sekundärbatterie gemäß Anspruch 4 aufweist.

## Revendications

1. Matériau actif cathodique (3) représenté par une formule de composition LiₓNiₐMn_{b}Co_{c}M¹_{d}M²ₑO₂, dans laquelle M¹ est au moins un ou plusieurs types d'éléments sélectionnés dans le groupe constitué d'Al, de Ti et de Mg ; M² est au moins un ou plusieurs types d'éléments sélectionnés dans le groupe constitué de Mo, de W et de Nb ; 0,2 ≤ x ≤ 1,2 ; 0,6 ≤ a ≤ 0,8 ; 0,05 ≤ b ≤ 0,3 ; 0,05 ≤ c ≤ 0,3 ; 0,02 ≤ d ≤ 0,04 ; 0,02 ≤e≤0,06; et a+b+c+d+e=1,0.

2. Matériau actif cathodique selon la revendication 1, dans lequel la valeur de « a » dans ladite formule se situe dans la plage suivante : 0,7 ≤ a ≤ 0,8.

3. Matériau actif cathodique selon la revendication 1 ou 2, dans lequel la valeur de « e » dans ladite formule se situe dans la plage suivante : 0,04 ≤ e ≤ 0,06.

4. Matériau cathodique pour une batterie secondaire au lithium-ion composée de particules comprenant le matériau actif cathodique selon l'une quelconque des revendications 1 à 3, dans lequel la concentration de M² contenue dans lesdites particules est plus élevée dans la partie superficielle desdites particules qu'à l'intérieur desdites particules.

5. Matériau cathodique pour la batterie secondaire au lithium-ion selon la revendication 4, dans lequel la concentration de M² contenue dans lesdites particules satisfait à ce qui suit : 1,09 ≤ (contenu de M² dans la partie superficielle) / (contenu de M² à l'intérieur).

6. Matériau cathodique pour la batterie secondaire au lithium-ion selon la revendication 5, dans lequel la concentration de M² contenue dans lesdites particules satisfait en outre à ce qui suit : (contenu de M² dans la partie superficielle) / (contenu de M² à l'intérieur) ≤ 1,42.

7. Batterie secondaire au lithium-ion dans laquelle une cathode (3) permettant de stocker et de libérer du lithium et une anode (4) permettant de stocker et de libérer du lithium sont disposées dans un électrolyte non aqueux avec un séparateur (5) interposé entre les deux, ladite cathode (3) comprenant le matériau cathodique pour la batterie secondaire au lithium-ion selon la revendication 4.
